# NEUE EUROPÄISCHE PATENTSCHRIFT

(11) **EP 1 646 488 B2**
(45) Veröffentlichungstag und Bekanntmachung des Hinweises auf die Entscheidung über den Einspruch: **19.06.2013**
(45) Hinweis auf die Patenterteilung: 09.05.2007
(21) Anmeldenummer: 04766186.3
(22) Anmeldetag: 12.07.2004
(51) Int. Cl.: B29C 43/22, B29C 59/02, B29C 59/04, B29C 69/02, B29D 7/01, B32B 17/10

(54) **VERFAHREN ZUR HERSTELLUNG VON FOLIEN AUF BASIS POLYMERER MATERIALIEN MIT STRUKTURIERTER OBERFLÄCHE**
METHOD FOR THE PRODUCTION OF FILMS BASED ON POLYMERIC MATERIALS HAVING A STRUCTURED SURFACE
PROCEDE DE PRODUCTION DE FILMS A BASE DE MATIERES POLYMERIQUES ET A SURFACE STRUCTUREE

(30) Priorität: 12.07.2003 DE 10331649
(43) Veröffentlichungstag der Anmeldung: 19.04.2006
(73) Patentinhaber: Kuraray Europe GmbH, 65926 Frankfurt am Main (DE)
(72) Erfinder: STENZEL, Holger, 53773 Hennef (DE)
(74) Vertreter: Kisters, Michael Marcus
(86) Internationale Anmeldenummer: PCT/EP2004/051450
(87) Internationale Veröffentlichungsnummer: WO 2005/005123

(56) Entgegenhaltungen:
- EP-A- 0 741 640
- WO-A-01/72509
- US-A- 4 671 913
- US-A- 5 425 977
- US-A- 5 455 103
- US-A- 6 077 374
- US-A- 6 093 471
- US-A1- 2003 022 015

## Beschreibung

### Technisches Gebiet

Die Erfindung betrifft ein Verfahren zur Herstellung einer Zwischenfolie mit strukturierter Oberfläche insbesondere für Verbundsicherheitsscheiben, auf Basis polymerer Materialien, insbesondere aus weichmacherhaltigem Polyvinylbutyral (PVB), mittels Schmelzbruchextrusion des polymeren Materials und anschließender Überprägung der so erhaltenen vorstrukturierten Folie.

Verbundsicherheitsscheiben,-bestehend aus zwei Glasscheiben und einer die Glasscheiben verbindenden Klebefolie, bevorzugt aus Polyvinylbutyral (PVB), aber auch aus Polyurethan (PU), Polyvinylchlorid (PVC) oder Ethylenvinylacetat (EVA) werden insbesondere als Windschutzscheiben in Kraftfahrzeugen eingesetzt, wobei gegebenenfalls eine Glasscheibe durch eine Kunststoffscheibe, vornehmlich aus einem amorphen Polyamid, transparentem PMMA, Polycarbonat (PC) oder Polyester (PET), ersetzt sein kann. Auch auf dem Bausektor, z.B. als Fensterscheiben oder als Zwischenwände, werden solche Silikatglas/Silikatglas- bzw. Silikatglas/Kunststoff-Verbunde eingesetzt, wobei gegebenenfalls je nach ihrer Verwendung, z.B. als Verbundpanzergläser, auch Mehrfachverbunde, also Verbunde, die aus mehr als zwei tragenden Schichten bestehen, eingesetzt werden.

Während Verbundsicherheitsscheiben für den Baubereich i.a. eine möglichst hohe Haftung zwischen Glas und Klebefolie aufweisen sollen, wird für Verbundsicherheitsscheiben für Kraftfahrzeuge eine definierte, nicht zu hohe Haftung angestrebt

### Stand der Technik

Weichmacherhaltige Folien auf der Basis von Polyvinylbutyral (PVB) zur Herstellung von Sicherheitsverbundgläsern sind bereits bei Raumtemperatur sehr weich und klebrig. Die hohe Klebrigkeit ist zwar unerlässlich für den Zusammenhalt des Verbundes Glas-Folie-Glas in Verbundgläsern, für den Transport und den Verarbeitungsprozess zu diesen Gläsern muss die Klebrigkeit jedoch vorübergehend beseitigt, zumindest aber unterdrückt werden.

Des weiteren muss beim Verarbeiten der Folie zu Verbundsicherheitsgias die zwischen Folie und Glas befindliche Luft entfernt werden können. Hierzu ist es allgemein bekannt, die Folien ein- oder beidseitig mit einer aufgerauten Oberfläche zu versehen. Die bei der Herstellung des Glaslaminats eingeschlossene Luft kann über die aufgeraute Oberfläche entweichen, sodass ein blasenfreies Laminat erhalten wird.

Üblicherweise liegen die Rauhigkeitswerte einer solchen Zwischenfolie, gemessen als Rz nach DIN EN ISO 4287, zwischen 8 und 60 µm. Ein typisches Verfahren zur Herstellung von Folien mit aufgerauter Oberfläche ist aus der EP 0 185 863 B1 als Schmelzbruchverfahren bekannt. Schmelzbruchverfahren führen zu unregelmäßig (stochastisch) aufgerauten Oberflächen.

Weitere im Stand der Technik beschriebene Verfahren zur Herstellung einer aufgerauten Oberfläche sind Prägeverfahren. Gemeinsames Kennzeichen aller durch Prägeverfahren hergestellten Folienoberflächen ist eine regelmäßige, (nicht-stochastische) Oberflächenstruktur, die vor allem im Herstellprozess von Glaslaminaten mit dem Vakuumsack-Verfahren ein gutes Entlüftungsverhalten zeigt und somit kurze Prozesszeiten und breite Verarbeitungsfenster ermöglicht.

EP 0 741 640 B1 beschreibt ein solches Verfahren zur Herstellung einer beidseitig geprägten Oberfläche mittels zweier Prägewalzen, durch die die Folie hindurch läuft und mit einer regelmäßigen, sägezahnartigen Linienstruktur versehen wird. Die auf jeder Seite der Folie eingeprägten Linien kreuzen sich in einem Winkel >25°, so das ein sogenanntes Moire-Muster im Verbundglas verhindert wird.

EP 1 233 007 A1 offenbart zur Vermeidung des Moire-Effektes ein Prägeverfahren, das unterschiedliche Abstände in einer regelmäßigen, linienförmigen Prägestruktur auf jeder Seite der Folie erzeugt. Dadurch kann ein Winkel der sich auf jeder Folienseite kreuzenden Linienstruktur von kleiner als 25° gewählt werden.

Ein anderes, in US 5,972,280 beschriebenes Verfahren, verwendet zum Prägen der Oberflächenstrukturierung anstelle zweier Prägewalzen nur eine Walze und ein an der Walze über Rollen und Druckluft anliegendes strukturiertes Stahlband, wobei die Folie während des Prägevorgangs durch den Spalt zwischen Prägewalze und Stahlband geführt wird.

US 4,671,913 betrifft die zweistufige Prägung einer PVB-Folie unter Erhalt einer Endrauhigkeit von 10 - 60 µm. Hierbei wird die PVB-Folie zu einer ersten Folie ausgewalzt, die dann bei Folien- und Prägerollen-Temperaturen von 100-150 °C zur geprägten Folie weiter verarbeitet wird. Das Schmelzbruchverfahren wird zur Herstellung der ersten Folie nicht eingesetzt.

US 6,077,374 offenbart eine PVB-Folle mit einer unregelmäßigen (stochastischen) Struktur auf der ersten Oberfläche und eine durch Prägung erhaltene regelmäßige Struktur auf der zweiten Oberfläche. Die geprägte Oberfläche weist eine Rauhigkeit von ca. 30 µm auf.

US 6,093,471 beschreibt das Prägen einer PVB-Folle unter Erhalt einer Rauhigkeit von 30 - 90 µm, wobei eine gekühlte (13 °C) Folie mit einem geheizten (260 °C) Prägewerkzeug behandelt wird.

WO 01/72509 A2 offenbart die Verwendung einer PVB-Folie mit einer Rauhigkeit von 20 - 80 µm zur Herstellung von Glaslaminaten. Die Temperaturen der PVB-Folie und der Prägewerkzeuge während des Prägevorgangs sind dieser Publikation nicht zu entnehmen.

Prägeverfahren haben im Vergleich zu Schmeizbruchverfahren den Vorteil, dass die erhaltene regelmäßige Oberflächenstruktur eine schnellere und einfachere Entlüftung bei der Laminatherstellung erlaubt. Nachteilig an Prägeverfahren ist im Gegensatz zum Schmelzbruchverfahren, wo sich die Oberflächenstruktur direkt nach dem Verlassen der Extrusionsdüse auf der Folie befindet, dass die Strukturierung offline in einem zweiten Herstellschritt eingebracht wird.

PVB-Folien neigen auf Grund der starken Eigenhaftung auch zu einer starken Haftung an den Präge- und Transportwalzen. Dies erschwert nicht nur das gesamte Handling der Folie bis zur Prägeeinrichtung, sondern auch den Prägevorgang als solchen. Die Folie kann bei einem kontinuierlichen Prozess an den Transportwalzen festkleben und einen konstanten Produktionsprozess verhindern. Wird die Prägung offline zu einem späteren Zeitpunkt als die Produktion der Folie selbst aufgebracht, stellt die Lagerung und das Handling einer glatten, nicht strukturierten Folie eine anspruchsvolle Aufgabe dar.

### Offenbarung der Erfindung

### Technische Lösung

Aufgabe der vorliegenden Erfindung war es, ein Verfahren zur Herstellung von oberflächenstrukturierten, Folien auf Basis von polymeren Materialien, insbesondere weichmacherhaltigen, teilacetalisierten Polyvinylalkohol zu entwickeln, deren Oberflächen eine gute Weiterverarbeitung der Folie bei der Laminierung mit Glas ermöglichen.

Es wurde gefunden, das Folien, die in einem zweistufigen Verfahren zunächst mittels Schmelzebruch und anschließend mit einem Prägeverfahren strukturiert wurden, eine einfache Laminierung mit Glasscheiben zu Verbundglas erlauben.

Im erfindungsgemäßen Verfahren wird die Folie zunächst mit einer unregelmäßigen Schmelzebruchstruktur versehen, die dann anschließend mit entsprechend aufgerauten Prägewerkzeugen mit einer regelmäßigen Struktur überprägt wird.

Gegenstand der vorliegenden Erfindung ist daher ein Verfahren gemäß Anspruch 1.

Als polymeres Material können teilacetalisierter Polyvinylalkohl, Polyvinylbutyral, Polyvinylchlorid, Polyurethan und/oder teilacetalisiertes Ethylenvinylacetat, jeweils alleine, als Copolymerisat der entsprechenden Monomere oder als Polymerblend eingesetzt werden.

Die im erfindungsgemäßen Verfahren eingesetzten polymeren Materialien werden bevorzugt In Form von Mischungen der Polymeren mit mindestens einem Weichmacher, Farbstoffen, Pigmenten, Metallsalzen zur Haftungsregulierung, organischen Additiven und/oder anorganischen Füllstoffen eingesetzt.

Als teilacetalisierter Polyvinylalkohol wird insbesondere Polyvinylbutyral (PVB) oder ggf. teilacetalisierte Ethylen-Vinylacetat-Copolymere, eingesetzt.

Die Oberflächenstruktur im Extrusionsprozess gemäß Schritt a) wird bevorzugt durch das sogenannte Fließ- oder Schmeizbruchverfahren entsprechend der EP 0 185 863 B1, auf deren inhalt hier ausdrücklich hingewiesen wird, aufgebracht Unterschiedliche Rauhigkeitsniveaus können durch Variation der Austrittsspaltweite und der Düsen-Lippentemperaturen unmittelbar am Düsenaustritt gezielt erzeugt werden. Dieses Verfahren führt zu einer unregelmäßigen, (stochastischen) annähernd isotropen Rauhigkeit (random roughness). Das heißt, der Messwert der Rauhigkeit ist über alle Richtungen gemessen annähernd gleich, wobei die einzelnen Erhebungen und Vertiefungen jedoch unregelmäßig in ihrer Höhe und Verteilung angeordnet sind.

Die Messung der Oberflächenrauhigkeit mit dem Rauhigkeitswert Rz erfolgt nach DIN EN ISO 4287 und DIN ISO 4288. Die zur Messung der Oberflächenrauhigkeit verwendeten Messgeräte müssen der EN ISO 3274 genügen. Die eingesetzten Profilfilter müssen der DIN EN ISO 11562 entsprechen.

Die Oberflächenrauhigkeiten einer Folie mit Schmelz-bruchoberfläche, hergestellt gemäß Schritt a), liegen im Bereich zwischen Rz = 8 µm bis Rz = 60 µm, bevorzugt im Bereich zwischen Rz =10 µm bis Rz = 30 µm, besonders bevorzugt im Bereich zwischen Rz = 10 µm bis Rz = 20 µm. Folien mit einer solchen Oberflächenrauhigkeit sind geeignet, um komplikationslos von der Extrusionsdüse bis zur Prägeeinheit gemäß Schritt b) transportiert zu werden bzw. um eine Lagerung mit anschließendem Handling zu einer Offline-Prägung zu ermöglichen. In dem anschließenden Prägeverfahren b) kann die stochastische Struktur des Schmelzbruchs nahezu vollständig durch eine regelmäßige Oberflächenstruktur ersetzt werden.

Im anschließenden Prägeverfahren gemäß Schritt b) wird die Folie beidseitig mit einer regelmäßigen Oberflächenstruktur und einer Rautlefe im Bereich von Rz = 35 µm bis Rz = 120 µm bzw. Rz = 40 µm bis Rz = 120 µm versehen. Bevorzugt besitzt die erfindungsgemäß hergestellte Folie eine Rauhigkeit Rz von 35 µm bis 80 µm, 35 µm bis 65 µm oder 35 µm bis 50 µm bzw. 50 µm bis 80 µm. Dazu kann die Folie vor dem eigentlichen Prägevorgang auf eine Temperatur gebracht werden, die gemessen an der Folienoberfläche oberhalb der Glasübergangstemperatur des polymeren Materials und unterhalb einer Extrusionstemperatur von 240°C, bevorzugt zwischen 100°C und 160°C, besonders bevorzugt zwischen 125° und 150°C liegt. Die Temperaturangaben beziehen sich auf das Folienmaterial, insbesondere auf die zu prägende Oberfläche. Idealerweise liegt die Prägetemperatur knapp unterhalb der Temperatur, bei der die Glaslaminate später im Autoklaven verpresst werden.

Bei einseitig strukturierten Folien erfolgen Verfahrensschritt a) und b) selbstverständlich auf der gleichen Folienseite.

Es ist möglich, Verfahrensschritt b) in mehreren aufeinanderfolgenden Prägestufen durchzuführen. In diesen aufeinander folgenden Prägestufen können weiterhin jeweils unterschiedliche Seiten der Folie strukturiert werden. Die auf einander folgenden Prägestufen können bei unterschiedlichen Temperaturen der Prägewerkzeuge durchgeführt werden.

Das erfindungsgemäße Verfahren kann so durchgeführt werden, dass die Seiten einer beidseitig strukturierten Folie unterschiedliche Rautiefen R_{z} aufweisen. Dies kann z.B. durch verschiedene Prägestufen mit verschiedenen Werkzeugen oder Temperaturen der Prägewerkzeuge erreicht werden.

Der Prägevorgang nach Schritt b) erfolgt bevorzugt in einem Prägewerkzeug, dessen Oberflächen der negativen Profilierung der später in der Folienoberflächen befindlichen Struktur entspricht.

Wird ein Prägeverfahren mit Walzen eingesetzt, wird die Folle in einen Spalt, der kleiner ist als die Follendicke, eingeführt. Der Spalt wird gebildet aus zwei gegeneinander rotierenden Walzen aus Stahl, auf der sich die entsprechende negative Oberflächenstruktur befindet Die Rautiefe der Werkzeugstrukturierung kann dabei die Rautiefe der Follenstrukturierung deutlich übertreffen bzw. die Rautiefe einer oder beider Folienseiten kann auch kleiner sein als die der eingesetzten Prägewerkzeuge. Es können auch mehrere Walzen verwendet werden, bei sich die Oberflächenstruktur der Prägewalzen in der Rauhigkeit unterscheiden.

Durch Wahl der Verfahrensparameter Walzenspalt, Folien- und/oder Walzentemperatur, Walzengeschwindigkeit und Umschlingungswinkel der Folienbahn auf der Walze kann bei vorgegebener Rautiefe der Prägewalzen die Rautiefe der Folienprägung beeinflusst werden. Die Prägewalzen sind auf eine Temperatur zwischen 10°C und 30°C temperiert.

Nach dem Prägevorgang wird die Folie abgekühlt und die Oberflächenstruktur der Folie fixiert. Wird bahnförmige Ware über Walzen geprägt, erfolgt die Abkühlung über temperierte Kühlwalzen. Idealerweise liegt die Kühlwalzentemperatur unterhalb der Glasübergangstemperatur der Folie.

Neben dem einstufigen Prägeverfahren kann auch ein mehrstufiges Verfahren verwendet werden. So wird beispielsweise bei einem zweistufigen Prägeverfahren zunächst eine Folienoberfläche und im zweiten Schritt die zweite Oberfläche der Folie geprägt. Hierbei erfolgt die Prägung zwischen einer strukturierten Stahlwalze und einer glatten Gummiwalze zweimal hintereinander, wobei die Position von Stahl- und Gummiwalze in der zweiten Stufe gegenüber der ersten Stufe vertauscht ist.

In einer besonderen Ausführungsform der vorliegenden Erfindung kann die Haftung der Folie an den Prägewerkzeugen weiter vermindert werden, indem dem Folienmaterial vor der Extrusion gemäß Schritt a) eine die Haftkraft vermindernde Substanz zugesetzt wird.

Als haftungsreduzierendes organisches Additiv können z.B. 0.01 bis 2 Gew.%, bezogen auf die Gesamtmischung, Pentaerythrite der Formel I

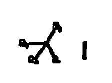

wobei R₁, R₂, R₃, R₄ jeweils gleich oder verschiedenen für Reste der Gruppe -CH₂OH, -CH₂OR₅, -CH₂OCOR₅ oder -CH₂OCO-R₆-COOR₅, stehen und R₅, R₆ für gesättigte oder ungesättigte, verzweigte oder unverzweigte Kohlenwasserstoffreste mit 1 bis 26 Kohlenstoffatome stehen, zugesetzt werden.

Als Weichmacher für die polymeren Materialien eignen sich zum einen alle nach dem Stand der Technik zu diesem Zweck bekannten Weichmacher, Insbesondere die Ester von mehrwertigen Säuren, mehrwertigen Alkoholen oder Oligoetherglykolen, wie z. B. Adipinsäureester, Sebazinsäureester oder Phthalsäureester, insbesondere Di-n-hexyladipat, Dibutylsebazat, Dioctylphthalat, Ester von Di-, Tri- oder Tetraglykolen mit linearen oder verzweigten aliphatischen Carbonsäuren und Mischungen dieser Ester. Als Standardweichmacher für teilacetalisierte Polyvinylalkohole, insbesondere Polyvinylbutyral, werden bevorzugt Ester von aliphatischen Diolen mit langkettigen aliphatischen Carbonsäuren, insbesondere Ester von Triethylenglykol mit 6 bis 10 C-Atomen enthaltenden aliphatischen Carbonsäuren, wie 2-Ethylbuttersäure oder n-Heptansäure eingesetzt. Besonders bevorzugt sind ein oder mehrere Weichmacher aus der Gruppe bestehend aus Di-n-hexyladipat (DHA), Dibutylsebazat (DBS), Dioctylphthalat (DOP), Ester von Di-, Tri- oder Tetraglykolen mit linearen oder verzweigten aliphatischen Carbonsäuren, insbesondere Triethylenglykol-bis-2-ethylbutyrat (3GH), Triethylenglykol-bis-n-heptanoat (3G7), Triethylenglykol-bis-2-ethylhexanoat (3G8), Tetraethylenglykol-bis-n-heptanoat (4G7).

Die als optionaler Zusatz verwendeten Pentaerythrite bzw. deren Ester erleichtern bei Einsatz von teilacetalisierten Polyvinylalkoholen als polymerem Material aber auch den Einsatz von Spezialweichmachern, die z. B. eine verbesserte Schalldämmung der Folien bewirken, siehe auch die DE 199 38 159 A1, auf deren Inhalt hiermit vollinhaltlich bezug genommen wird. Zu den Spezialweichmachern zählt insbesondere die Gruppe von Weichmachern bestehend aus

Polyalkylenglykolen der allgemeinen Formel HO-(R-O)ₙ-H mit R = Alkylen und n > 5,

Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,

Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ-R₁ mit n>2, m > 3 und (n+m) < 25 und R₁ als organischem Rest,

Derivate von Polyalkylenglykolen der allgemeinen Formel R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist,

Derivate von Polyalkylenglykolen der allgemeinen Formel R₁-O-(R₂-O)ₙ-R₃ mit R₂ = Alkylen und n > 5, bei denen der Wasserstoff bei der terminaler Hydroxygruppen des Polyalkylenglykols durch einen organischen Rest R₁ bzw. R₃ ersetzt ist

Diese Spezialweichmacher werden bevorzugt bei teilacetalisierten Polyvinylalkoholen, hier insbesondere PVB, in Kombination mit einem oder mehreren Standardweichmachem eingesetzt.

Das plastifizierte teilacetalisierte Polyvinylalkohol-Harz enthält vorzugsweise 25 bis 45 Gewichtsteile und besonders bevorzugt 30 bis 40 Gewichtsteile Weichmacher, bezogen auf 100 Gewichtsteile Harz.

Die teilacetalisierten Polyvinylalkohole werden in bekannter Weise durch Acetalisierung von hydrolysierten Polyvinylestern hergestellt. Als Aldehyde können beispielsweise Formaldehyd, Acetaldehyd, Propionaldehyd, Butyraldehyd u. dgl., bevorzugt Butyraldehyd, verwendet werden.

Das bevorzugt eingesetzte Polyvinylbutyral-Harz enthält 10 bis 25 Gew.-%, vorzugsweise 17 bis 23 Gew.-% und besonders bevorzugt 19 bis 21 Gew.-% Vinylalkoholreste bzw. 0 bis 20 Gew.-%, bevorzugt 0,5 bis 2,5 Gew.-% Acetatreste.

Der Wassergehalt der Folien wird bevorzugt auf 0,15 bis 0,8 Gew.-%, insbesondere auf 0,3 bis 0,5 Gew.-% eingestellt.

Die erfindungsgemäß hergestellten Folien können insbesondere bei der Herstellung von Laminaten aus einer oder mehreren Glasscheiben und/oder einer oder mehreren Kunststoffscheiben und mindestens einer strukturierten Folie verwendet werden.

Bei der Herstellung dieser Laminate wird zunächst aus den Glas/Kunststoffscheiben und der Folie ein Vorverbund mittels Pressen, Vakuumsack oder Vakuumlippe hergestellt. Vorverbundlaminate sind in der Regel noch durch Lufteinschlüsse leicht getrübt. Die endgültige Herstellung des Laminats erfolgt im Autoklaven, z.B. gemäß WO 03/033583.

### Beispiel

Eine PVB-Folie mit einer Zusammensetzung gemäß den Beispielen der WO 02/102 591 und einer unregelmäßigen Oberflächenstruktur und einer Rauhigkeit von Rz = 20 µm, hergestellt nach dem in EP 0185 863 B1 beschriebenen Schmelzbruchverfahren, wurde zwischen zwei Stahlwalzen mit einer Oberflächenrauhigkeit von Rz = 250 µm geprägt

Die Foliendicke betrug 0,76 mm, die Spaltweite zwischen den Prägewalzen war 0,4 mm. Vor dem Prägen wurde die Folienoberfläche auf 135°C erwärmt. Die Oberflächentemperatur der Prägewalzen betrug 30°C. Die Bahngeschwindigkeit betrug 10m/min. Nach dem Prägevorgang wurde die Folienbahn mittels Kühlwalzen auf 12°C abgekühlt. Die Folie hatte anschließend eine regelmäßige Oberflächenrauhigkeit von Rz = 50 µm. Die ursprüngliche, zum besseren Folientransport in der Produktionsanlage aufgebrachte unregelmäßige Raustruktur war nicht mehr zu erkennen.

## Patentansprüche

1. Verfahren zur Herstellung einer strukturierten Folie mit einer beidseitigen, nicht-stochastischen Rautiefe Rz von 35-120 µm auf Basis von polymeren Materialien, **gekennzeichnet durch** die Verfahrensschritte
a. Schmelzbruchextrusion der polymeren Materialien unter Erhalt einer Folie mit einer beidseitigen stochastischen Rautiefe Rz von 8-60 µm.
b. Prägen der Folie aus a) bei einer Folientemperatur von 100-160°C mit
entsprechend aufgerauten Prägewalzen einer Temperatur von 10 - 30°C unter Erhalt einer Folie mit einer beidseitigen, nicht-stochastischen Rautiefe Rz von 35 bis 120 µm.

2. Verfahren nach Anspruch 1, **dadurch gekennzeichnet, dass** Verfahrensschritt b) in mehreren aufeinanderfolgenden Prägestufen durchgeführt wird.

3. Verfahren nach Anspruch 2, dadurch **gekenntzeichnet, dass** in den aufeinander folgenden Prägestufen unterschiedliche Seiten der Folie strukturiert werden.

4. Verfahren nach Anspruch 2 oder 3, **dadurch gekennzeichnet, dass** die auf einander folgenden Prägestufen bei unterschiedlichen Folien- und/oder Prägewalzenzeugtemperaturen durchgeführt werden.

5. Verfahren nach einem der Ansprüche 1 bis 4, **dadurch gekennzeichnet, dass** die Seiten einer beidseitig strukturierten Folie unterschiedliche Rautiefen R_{z} aufweisen.

6. Verfahren nach einem der Ansprüche 1 bis 5, **dadurch gekennzeichnet, dass** die Rautiefe einer oder beider Folienseiten kleiner als die der eingesetzten Prägewalzen ist.

7. Verfahren nach einem der Ansprüche 1 bis 6, **dadurch gekennzeichnet, dass** als polymeres Material teilacetalisierter Polyvinylalkohol, Polyvinylbutyral, Polyvinylchlorid, Polyurethan und/oder teilacetalisiertes Ethylenvinylacetat, jeweils alleine, als Copolymerisat der entsprechenden Monomere oder als Polymerblend eingesetzt wird.

## Claims

1. A process for producing a structured film which is based on polymeric materials and has a non-stochastic surface roughness Rz of 35 to 120 µm on both sides, **characterized by** the following process steps:
a. Melt fracture extrusion of the polymeric materials to obtain a film having a stochastic surface roughness Rz of 8 to 60 µm on both sides.
b. Embossing of the film obtained from a) at a film temperature of 100 to 160 °C using embossing rollers which have been roughened accordingly having a temperature of 10 to 30 °C to obtain a film having a non-stochastic surface roughness Rz of 35 to 120 µm on both sides.

2. The process according to Claim 1, **characterized in that** process step b) is carried out in multiple successive embossing stages.

3. The process according to Claim 2, **characterized in that** different sides of the film are structured in the successive embossing stages.

4. The process according to Claim 2 or 3, **characterized in that** the successive embossing stages are carried out at different film temperatures and/or embossing roller temperatures.

5. The process according to one of Claims 1 to 4, **characterized in that** the sides of a film which is structured on both sides have different surface roughness R_{z}.

6. The process according to one of Claims 1 to 5, **characterized in that** the surface roughness of one or both sides of the film is smaller than that of the embossing rollers used.

7. The process according to one of Claims 1 to 6, **characterized in that**, as polymeric material, partially acetalized polyvinyl alcohol, polyvinyl butyral, polyvinyl chloride, polyurethane and/or partially acetalized ethylene vinyl acetate is used, individually in each case, as copolymerisate of the corresponding monomers or as polymer blend.

## Revendications

1. Procédé de fabrication d'une feuille structurée, présentant des deux côtés une rugosité non-stochastique Rz comprise entre 35 et 120 µm, à base de matériaux polymères, **caractérisé par** les étapes consistant à
a) soumettre lesdits matériaux polymères à une extrusion avec rupture de l'écoulement pour ainsi obtenir une feuille présentant des deux côtés une rugosité stochastique Rz comprise entre 8 et 60 µm
b) soumettre la feuille obtenue à l'étape a) à un gaufrage au moyen de cylindres de gaufrage présentant une rugosité adéquate et une température de 10 à 30 °C, la température de la feuille étant comprise entre 100 et 160 °C
pour ainsi obtenir une feuille présentant des deux côtés une rugosité non-stochastique Rz comprise entre 35 et 120 µm.

2. Procédé selon la revendication 1, **caractérisé en ce que** l'étape de procédé b) est réalisée en plusieurs étapes de gaufrage successives.

3. Procédé selon la revendication 2, **caractérisé en ce que** les étapes de gaufrage successives permettent de structurer différents côtés de la feuille.

4. Procédé selon la revendication 2 ou 3, **caractérisé en ce que** les étapes de gaufrage successives sont mises en oeuvre à différentes températures de feuille et/ou de cylindre de gaufrage.

5. Procédé selon l'une des revendications 1 à 4, **caractérisé en ce que** les côtés d'une feuille structurée sur ses deux côtés présentent différentes rugosités Rz.

6. Procédé selon l'une des revendications 1 à 5, **caractérisé en ce que** la rugosité d'un ou des deux côtés de la feuille est inférieure à celle du cylindre de gaufrage mis en oeuvre.

7. Procédé selon l'une des revendications 1 à 6, **caractérisé en ce que** l'on met en oeuvre, en tant que matériau polymère, de l'alcool polyvinylique partiellement transformé en acétal, du polyvinyle de butyral, du polychlorure de vinyle, du polyuréthane et/ou de l'éthylène-acétate de vinyle partiellement transformé en acétal, lesquels peuvent être mis en oeuvre seuls, sous forme de produits de copolymérisation réalisés à partir des monomères correspondants ou sous forme d'un mélange de polymères.
